# EUROPÄISCHE PATENTSCHRIFT

(11) **EP 0 697 102 B1**
(45) Veröffentlichungstag und Bekanntmachung des Hinweises auf die Patenterteilung: **20.08.1997**
(21) Anmeldenummer: 94916942.9
(22) Anmeldetag: 06.05.1994
(51) Int. Cl.: G01K 15/00

(54) **HOCHTEMPERATUR-THERMOELEMENT-KALIBRIERUNG**
CALIBRATION OF HIGH-TEMPERATURE THERMOCOUPLES
ETALONNAGE DE THERMOCOUPLES POUR TEMPERATURES ELEVEES

(30) Priorität: 08.05.1993 DE 4315386
(43) Veröffentlichungstag der Anmeldung: 21.02.1996
(73) Patentinhaber: INDUSTRIEANLAGEN-BETRIEBSGESELLSCHAFT M.B.H., D-85521 Ottobrunn (DE)
(72) Erfinder: GAUS, Rainer, D-83607 Holzkirchen (DE); DIENZ, Michael, D-83024 Rosenheim (DE); BÄR, Kait, K., O., D-85521 Ottobrunn (DE)
(74) Vertreter: Bohnenberger, Johannes, Dr.
(86) Internationale Anmeldenummer: EP9401463
(87) Internationale Veröffentlichungsnummer: WO9427124

(56) Entgegenhaltungen:
- MEASUREMENT AND CONTROL, Bd.12, Nr.5, Mai 1979, LONDON GB Seiten 207 - 213 BARBER E.A. 'THERMOCOUPLES ABOVE 600 C: INFRARED-THERMOMETERS AND PYROMETERS'
- SOLID STATE TECHNOLOGY, November 1972 Seiten 40 - 43 G.J. FULLIN E.A. 'A CENTRALIZED TEMPERATURE CONTROL SYSTEM FOR DIFFUSION FURNACES'
- REVIEW OF SCIENTIFIC INSTRUMENTS, Bd.64, Nr.1, Januar 1993, NEW YORK US Seiten 218 - 220 E. SCHRECK E.A. 'CALIBRATION OF MICRON-SIZE THERMOCOUPLES FOR MEASUREMENTS OF SURFACE TEMPERATURES'

## Beschreibung

Die Erfindung betrifft ein Verfahren und die zur Realisierung dienende Vorrichtung zur Kalibrierung von Thermoelementen im Temperaturbereich von Raumtemperatur bis ca. 2800°C mit einem bevorzugten Arbeitsbereich von ca. 700 - 1800°C gemäß dem kennzeichnenden Teil des Anspruchs 1.

Die bisherigen Standard-Kalibrierverfahren für den industriellen Einsatz sind auf maximale Temperaturen bis ca. 1300°C begrenzt und dadurch gekennzeichnet, daß die zu kalibrierenden Thermoelemente durch kontaktierendes Aufheizen in Kalibrieröfen homogen beheizt werden, üblicherweise durch Widerstandsheizung. Homogen bedeutet, daß nicht die Spitze des Thermoelementes, sondern ein Bereich von ca. 200mm aufgeheizt werden muß; das ist aber üblicherweise ein Bereich, in dem beim realen Einsatz ein Temperaturgradient vorhanden ist. Als spezielles, primär für Laboreinsatz geeignetes Kalibrierverfahren wird das Schmelzen von Materialien, in der Regel in Form von Drähten, mit genau bekanntem Schmelzpunkt praktiziert (Fritz Lieneweg: Handbuch der technischen Temperaturmessung, Vieweg 1976). Weiterhin ist ein Kalibrierverfahren bekannt, bei dem Temperaturen bis ca. 2000°C durch Messen des thermischen Rauschens infolge thermischer Erregung eines auf gleichem Temperaturniveau befindlichen Vergleichselementes bestimmt werden (H.Brixy: Kombinierte Thermoelement-Rauschthermometrie Kernforschungsanlage Jülich GmbH; Institut für Reaktorentwicklung, Forschungsbericht '86 Jül-2051). Dieses Verfahren erfordert jedoch eine extrem aufwendige und kostenintensive Signalverarbeitung.

Aus Review of Scientific Instruments, 64 (1993) January No. 1, Seite 218 bis 220, ist ferner ein Kalibrierverfahren von eingebetteten Dünnfilmthermoelementen bekannt, die zur Messung transienter Oberflächentemperaturen genutzt werden.

Das Thermoelement besteht aus einer Kombination eines thermischen Widerstands mit einem thermischen Leitfähigkeitssensor, bestehend aus Thallium-Gold-Thallium-Schichten. Der thermische Widerstandssensor ist ein Nickelstreifen, der sich zwischen zwei Thallium-Gold-Thallium-Leitern befindet. Das Ganze ist in die Oberfläche eines Aluminiumkörpers eingebettet.Zur Kalibrierung wird u.a. mittels eines Laserstrahls der 5145 Å-Linie eines Argonlasers punktuell über die Länge des 60 µm langen Nickelstreifens aufgeheizt und die Temperatur gemessen. Zur Fokussierung des Laserstrahls dient ein Mikroskopobjektiv. Es wurde auf diese Weise eine Empfindlichkeit für das Thermoelement von 7 µV/°C bis zu einer Maximaltemperatur von 40°C bestimmt.

Der Nachteil dieses Standes der Technik besteht darin, daß durch den großen aufgeheizten Bereich Fehler 1. und 2. Art in diesen Bereichen nicht detektiert werden können. Der große aufzuheizende Bereich ist verfahrensmäßig bedingt, um sicherzustellen, daß die Thermoelementspitze die Ofentemperatur voll erreicht und nicht durch Wärmeleiteffekte über die Drähte ein -ΔT aufweist. Fehler 1. Art beruhen primär auf Diffusionsvorgängen und Umlegierungseffekten, die die Materialzusammensetzung und somit die thermoelektrischen Eigenschaften verändern. Fehler 2. Art entstehen, wenn Thermoelemente, die den materialbegründeten Fehler 1. Art aufweisen, im Bereich anderer Temperaturgradienten eingesetzt werden.

Der Erfindung liegt daher die Aufgabe zugrunde, ein Thermoelement-Kalibrierverfahren und die zugehörige Vorrichtung in der Art bereitzustellen, daß die Fehler 1. und 2. Art mit Bezug auf einen vorgegebenen Temperaturgradienten quantitativ nachgewiesen werden und Kalibrierungen bis zu Temperaturen von mindestens 1800°C durchgeführt werden können.

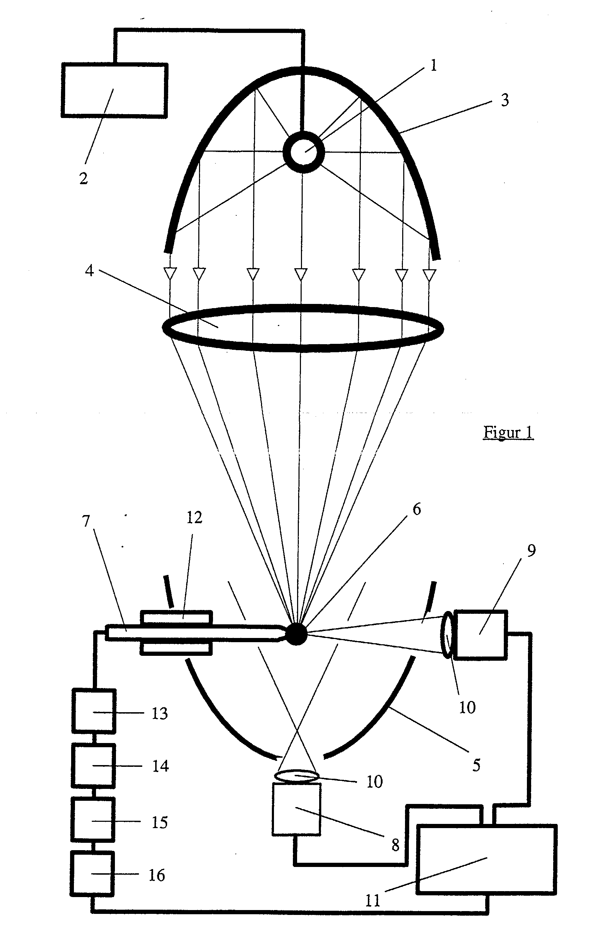

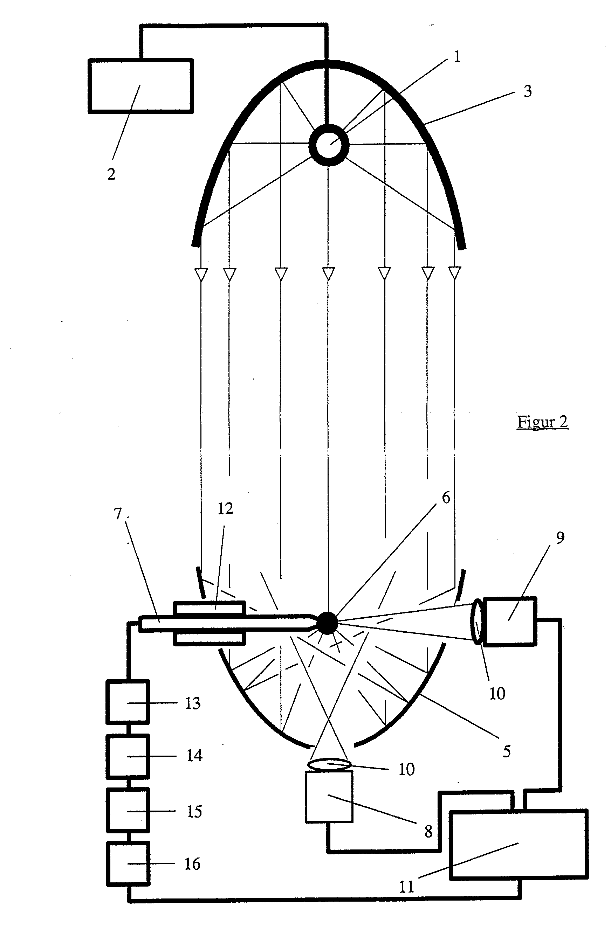

Diese Aufgabe wird erfindungsgemäß wie folgt gelöst: Ausgehend von einer modulierten (z.B. Wechselstrombetrieb) Lichtquelle 1, vorzugsweise einem Halogen-Punktstrahler als IR-Quelle, wird eine IR-Strahlung, die mittels Dimmer 2 in einfacher Weise auf bestimmte Temperaturniveaus eingestellt werden kann, erzeugt. Die Modulation der Lichtquelle ermöglicht eine Separation der Strahlung, ausgehend von der Thermoelementspitze 6 einerseits und dem reflektierten Anteil der Lichtquelle andererseits. Die IR-Strahlung des Punktstrahlers 1 wird mittels eines Reflektors 3 derart gebündelt, daß je nach Ausgestaltung paralleles Licht über ein Linsensystem 4 (Figur 1) oder über einen Parabolreflektor 5 (Figur 2) fokussiert wird. In beiden Ausführungen wird die Strahlung auf die Thermoelementspitze 6 fokussiert. Durch diese Art der Aufheizung wird ausschließlich die Spitze 6 des Thermoelementes 7 auf die gewünschte Kalibriertemperatur aufgeheizt. Dabei dient eine Positionierungsvorrichtung 12, vorzugsweise aus Al₂O₃, zur reproduzierbaren Fixierung der Thermoelementspitze 6 im Brennpunkt. Da eine genaue Kenntnis der Emissivität erforderlich ist, werden erfindungsgemäß wenigstens 2 Pyrometer derart eingesetzt, daß das erste Pyrometer 8 den AC- und DC-Anteil der Heizstrahlung und das zweite Pyrometer 9 den AC- und DC-Anteil der Thermoelementspitze 6 mißt. Dabei ist der AC-Anteil die Amplitude der Strahlungsmodulation und der DC-Anteil ist die über die Modulation gemittelte Strahlungsleistung. Den Pyrometern vorgeschaltet ist jeweils ein fokussierendes Linsensystem 10, die Messungen der Pyrometer erfolgen durch Öffnungen 17 und 18 in dem Reflektor 5. Der Brennpunkt des Linsensystems 10 des Pyrometers 9 liegt auf der Thermoelementspitze 6, der Brennpunkt des Linsensystems 10 des Pyrometers 8 liegt unterhalb der Thermoelementspitze 6, derart, daß das Bild des gesamten Reflektors 3 abgebildet wird (bis auf die zu vernachlässigende Abschattung durch die Thermoelementspitze 6). Die Meßsignale der Pyrometer 8 und 9 werden einem Mikroprozessor 11 zugeleitet, der aus dem Quotienten der beiden AC-Anteile die Emissivität der Thermoelementspitze 6 in Realzeit ermittelt und mit der Kenntnis der Emissivität und somit der Reflektivität aus den DC-Anteilen die Temperatur der Thermoelementspitze 6 unter Berücksichtigung der Multireflexion seitens der Heizstrahlung bestimmt. Diese Meßdaten werden mit dem mit der Temperatur in direkter Relation stehenden Meßsignal des Thermoelementes 7 verglichen. Dieses besteht aus einer EMK (Elektromotorische Kraft), die über eine Kaltstelle 13 gemessen, verstärkt und linearisiert wird. Kaltstelle 13, Verstärker 14, Linearisierer 15 und Meßprotokollschreiber 16 sind Stand der Technik und werden deshalb nicht in den Figuren dargestellt.

Die besonderen Vorteile des erfindungsgemäßen Verfahrens bzw. der technischen Ausgestaltung bestehen darin, daß bisher nicht erreichbare Meßbereiche bis 2800°C möglich sind und daß nur ein sehr kleiner Punkt beheizt werden muß, womit nur geringe Heizleistungen aufzubringen sind. Die Referenztemperatur wird nicht kontaktierend und somit sehr schnell gemessen; das Gerät ist insgesamt relativ einfach, leicht, portabel, außerdem können die Kalibrierzeiten extrem reduziert werden. Wichtig ist ferner, daß für die messungen kein Regelkreis erforderlich ist. Das Gerät besteht im wesentlichen aus handelsüblichen Komponenten und ist trotz höherer Leistungen deutlich billiger als bisherige Lösungen.

Zur Signalverarbeitung: Die AC-Signale werden mit sehr schnellen Analog/Digital-Karten aufgezeichnet und die Integration über die Modulation kann mittels Fouriertransformationskarten durchgeführt werden.

Obwohl der normale Arbeitsbereich des erfindungsgemäßen Kalibrierverfahrens 700 - 1800°C beträgt, kann durch Modifikation des Pyrometersystems (andere Auswahl des Pyrometeraufnehmers) die Einsatztemperatur deutlich nach unten hin gesenkt werden, wobei dann auch die obere Grenze des Arbeitsbereiches entsprechend sinkt. Die gesamte Kalibriervorrichtung kann auch innerhalb einer Vakuumkammer im Hochvakuum betrieben werden.

## Patentansprüche

1. Verfahren zur Kalibrierung von Thermoelementen im Temperaturbereich von Raumtemperatur bis ca. 2800°C, mit einem bevorzugten Arbeitsbereich von ca. 700 - 1800°C, **gekennzeichnet durch** die Kombination folgender Verfahrensschritte:
- Die von einer modulierten Lichtquelle (1) erzeugte Strahlung wird nach Erzeugen eines parallelen Strahlengangs mittels eines parabolischen Reflektors (3) durch ein Linsensystem (4) oder durch einen Parabolreflektor (5) auf die Spitze (6) eines Thermoelementes (7) fokussiert.
- Die Emissivität und die Temperatur der Spitze (6) des Thermoelementes (7) werden mittels der Pyrometer (8) und (9) über je ein Linsensystem (10) gemessen.
- In einer Datenverarbeitungsanlage (11) wird die mittels der Pyrometer (8) und (9) ermittelte Emissivität und Temperatur der Spitze (6) verglichen mit der Meßtemperatur des Thermoelementes (7).

2. Verfahren gemäß Anspruch 1, **dadurch gekennzeichnet,** daß der übliche Kalibrierbereich ca. 700 ≤T≤ 1800°C beträgt und daß Kalibrierspitzentemperaturen von ca. 2800°C realisierbar sind.

3. Verfahren gemäß Anspruch 1, **dadurch gekennzeichnet,** daß durch andere Auswahl der Pyrometeraufnehmer (8) und (9) niedrigere Kalibrierbereiche einstellbar sind.

4. Verfahren gemäß Anspruch 1, **dadurch gekennzeichnet,** daß die Temperatur der Lichtquelle (1) stufenlos einstellbar ist.

5. Vorrichtung zur Kalibrierung von Thermoelementen im Hochtemperaturbereich von ca. 700 - 1800°C, **gekennzeichnet durch** die Kombination folgender Elemente:
- Als Wärmequelle wird eine Lichtquelle (1) eingesetzt.
- Zur Erzeugung eines parallelen Strahlengangs ist ein Reflektor (3) vorhanden.
- Zur stufenlosen Einstellung der Strahlungsleistung wird ein Dimmer (2) verwendet.
- Zur Fokussierung der Wärmestrahlung auf die Thermoelementspitze (6) wird ein Linsensystem (4) oder ein Parabolreflektor (5) eingesetzt.
- Zur Bestimmung des AC- und DC-Anteiles der Heizstrahlung ist ein Pyrometer (8) mit vorgeschaltetem Linsensystem (10) vorhanden.
- Das Pyrometer (8) mit Linsensystem (10) ist so positioniert, daß dessen Brennpunkt unterhalb der Spitze (6) des Thermoelementes (7) und damit unterhalb des Brennpunktes des Linsensystems (4) abgebildet wird.
- Das Pyrometer (9) mit Linsensystem (10) ist so angeordnet, daß sein Brennpunkt auf der Spitze (6) des Thermoelementes (7) liegt.

6. Vorrichtung gemäß Anspruch 5, **dadurch gekennzeichnet**, daß eine Positioniervorrichtung (12) zur reproduzierbaren Fixierung der Spitze (6) des Thermoelementes (1) vorhanden ist.

7. Vorrichtung gemäß Anspruch 5 **dadurch gekennzeichnet**, daß der Reflektor (5) Öffnungen oder Fenster (17) und (18) für den Strahlendurchgang zu den Pyrometern (8) und (9) mit deren Linsensystem (10) aufweist.

8. Vorrichtung gemäß Anspruch 5, **dadurch gekennzeichnet**, daß wenigstens je eine Mikroprozessoreinheit (11) mit Signalleitungen (19) sowie eine Meßdatenerfassungs- und speichereinheit (16) zur Verarbeitung der pyrometrisch gemessenen Signale vorhanden ist.

9. Vorrichtung gemäß Anspruch 5, **dadurch gekennzeichnet**, däß zur Messung der Signale des Thermoelementes (7) wenigstens je eine Kaltstelleneinheit (13), eine Verstärkereinheit (14) und eine Linearisierungseinheit (15) vorhanden sind.

10. Vorrichtung gemäß Anspruch 5, **dadurch gekennzeichnet**, daß zur Fokussierung der IR-Strahlung gleichzeitig sowohl das Linsensystem (4) und der Parabolreflektor (5) eingesetzt werden.

## Claims

1. Method for calibration of thermocouples in the temperature range of from room temperature up to about 2800°C, having a preferred operating range of about 700 - 1800°C, characterized by the combination of the following method steps:
- The radiation produced by a modulated light source (1) is focused, after production of a parallel beam, by means of a parabolic reflector (3) by a lens system (4) or by a parabolic reflector (5) onto the tip (6) of a thermocouple (7).
- The emissivity and temperature of the tip (6) of the thermocouple (7) are measured by means of the pyrometers (8) and (9) via in each case one lens system (10).
- A data processing system (11) is used to compare the emissivity and temperature of the tip (6), which have been determined by means of the pyrometers (8) and (9), with the measurement temperature of the thermocouple (7).

2. Method according to Claim 1, characterized in that the normal calibration range is about 700 ≤ T ≤ 1800°C, and in that peak calibration temperatures of about 2800°C can be achieved.

3. Method according to Claim 1, characterized in that lower calibration ranges can be set by different selection of the pyrometer sensors (8) and (9).

4. Method according to Claim 1, characterized in that the temperature of the light source (1) is infinitely variable.

5. Apparatus for calibrating thermocouples in the high-temperature range of about 700 - 1800°C, characterized by the combination of the following elements:
- A light source (1) is used as the heat source.
- A reflector (3) is provided in order to produce a parallel beam.
- A dimmer (2) is used for infinitely variable adjustment of the radiation power.
- A lens system (4) or a parabolic reflector (5) is used for focusing the heat radiation onto the thermocouple tip (6).
- A pyrometer (8) with a lens system (10) in front of it is provided for determining the AC and DC elements of the heat radiation.
- The pyrometer (8) is positioned with the lens system (10) such that its focus is formed underneath the tip (6) of the thermocouple (7) and thus underneath the focus of the lens system (4).
- The pyrometer (9) is arranged with the lens system (10) such that its focus is located on the tip (6) of the thermocouple (7).

6. Apparatus according to Claim 5, characterized in that a positioning apparatus (12) is provided for reproducible fixing of the tip (6) of the thermocouple (1).

7. Apparatus according to Claim 5, characterized in that the reflector (5) has openings or windows (17) and (18) for the beam to pass through to the pyrometers (8) and (9) with their lens system (10).

8. Apparatus according to Claim 5, characterized in that at least in each case one microprocessor unit (11) having signal lines (19) is provided, as well as a measurement data detection and storage unit (16) for processing the pyrometrically measured signals.

9. Apparatus according to Claim 5, characterized in that at least in each case one cold point unit (13), one amplifier unit (14) and one linearization unit (15) are provided for measuring the signals of the thermocouple (7).

10. Apparatus according to Claim 5, characterized in that both the lens system (4) and the parabolic reflector (5) are used simultaneously for focusing the IR radiation.

## Revendications

1. Procédé d'étalonnage de thermocouples dans les plages de températures allant de la température ambiante jusqu'à environ 2 800°C, avec une plage de travail préférentielle d'environ 700 à 1 800°C, caractérisé par la combinaison des étapes de procédé suivantes :
- le rayonnement produit d'une source de lumière modulée (1), après formation d'un faisceau de rayons parallèles au moyen d'un réflecteur parabolique (3), est focalisé par un système de lentilles (4) ou par un réflecteur parabolique (5) sur la pointe (6) d'un thermocouple (7),
- l'émissivité et la température de la pointe (6) du thermocouple (7) sont chacune mesurées au moyen des pyromètres (8) et (9) au travers d'un système de lentilles (10),
- l'émissivité et la température de la pointe (6) mesurées au moyen des pyromètres (8) et (9) sont comparées dans un dispositif de traitement de données (11) à la mesure de température du thermocouple (7).

2. Procédé selon la revendication 1, caractérisé en ce que la plage d'étalonnage usuelle se situe entre environ 700 ≤ T ≤ 1 800°C, et en ce que des températures extrêmes d'étalonnage de l'ordre de 2 800°C sont réalisables.

3. Procédé selon la revendication 1, caractérisé en ce que des plages d'étalonnage plus basses peuvent être établies par d'autre choix de capteurs de pyromètres (8) et (9).

4. Procédé selon la revendication 1, caractérisé en ce que la température de la source lumineuse (1) peut être réglée de manière continue.

5. Dispositif d'étalonnage de thermocouples dans les plages de températures élevées de l'ordre de 700 à 1 800°C, caractérisé par la combinaison des éléments suivants :
- une source de lumière (1) est utilisée en tant que source de chauffage,
- un réflecteur (3) est agencé pour produire un faisceau de rayons parallèles,
- un réducteur (2) est utilisé pour régler de manière continue l'intensité de rayonnement,
- un système de lentilles (4) ou un réflecteur parabolique (5) sont prévus pour focaliser le rayonnement de chauffage sur la pointe (6) du thermocouple,
- un pyromètre (8) avec un système de lentilles frontales est agencé pour établir la partie AC et DC du rayonnement de chaleur,
- le pyromètre (8) avec son système de lentilles (10) est agencé de telle sorte que son point focal soit formé sous la pointe (6) du thermocouple (7) et ainsi sous le point focal du système de lentilles (4),
- le pyromètre (9) et son dispositif de lentilles (10) est agencé de telle sorte que son point focal se situe sur la pointe (6) du thermocouple (7).

6. Dispositif selon la revendication 5, caractérisé en ce que l'on prévoit un dispositif de positionnement (12) pour fixer de manière reproductible la pointe (6) du thermocouple (1).

7. Dispositif selon la revendication 5, caractérisé en ce que le réflecteur (5) présente des ouvertures ou fenêtres (17) et (18) pour le passage des rayons vers les pyromètres (8) et (9) avec leur système de lentilles (10).

8. Dispositif selon la revendication 5, caractérisé en ce qu'il est au moins prévu une unité à microprocesseur (11) avec des lignes de signaux (19) ainsi qu'une unité de traitement de données de mesure et de mémoire (16) pour le traitement des signaux de mesure pyrométrique.

9. Dispositif selon la revendication 5, caractérisé en ce qu'il est au moins prévu une unité de réglage de froid (13), une unité d'amplification (14) et une unité de linéarisation (15) pour la mesure du signal du thermocouple (7).

10. Dispositif selon la revendication 5, caractérisé en ce que l'on agence simultanément un système de lentilles (4) et un réflecteur parabolique (5) pour la focalisation du rayonnement-IR.
